Europäisches Patentamt

European Patent Office

Office européen des brevets

(19)

(11) Numéro de publication : **0 228 432**
**B1**

(12) **FASCICULE DE BREVET EUROPÉEN**

(45) Date de publication du fascicule du brevet :
**19.07.89**

(51) Int. Cl.⁴ : **B 62 D 53/08**

(21) Numéro de dépôt : **86904218.4**

(22) Date de dépôt : **11.07.86**

(86) Numéro de dépôt international :
**PCT/FR 86/00250**

(87) Numéro de publication internationale :
**WO/8700495 (29.01.87 Gazette 87/03)**

(54) DISPOSITIF AUTOLUBRIFIANT POUR ATTELAGE D'ENGINS SEMI-REMORQUES.

(30) Priorité : **15.07.85 FR 8510921**

(43) Date de publication de la demande :
**15.07.87 Bulletin 87/29**

(45) Mention de la délivrance du brevet :
**19.07.89 Bulletin 89/29**

(84) Etats contractants désignés :
**AT BE CH DE FR GB IT LI LU NL**

(56) Documents cités :
**EP—A— 0 058 732**
**EP—A— 0 117 319**
**US—A— 3 704 924**
**US—A— 4 121 853**
**US—A— 4 169 635**
**US—A— 4 457 531**

(73) Titulaire : **Mamery, Gaby Eugène**

**Loisy-sur-Marne F-51300 Vitry-le-François (FR)**

(72) Inventeur : **Mamery, Gaby Eugène**

**Loisy-sur-Marne F-51300 Vitry-le-François (FR)**

(74) Mandataire : **Gérardin, Robert Jean René**
**PROT'INNOV INTERNATIONAL SA Résidence de**
**l'Observatoire avenue Georges Clémenceau Boîte**
**Postale 2764**
**F-51066 Reims Cédex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un dispositif autolubrifiant amovible pour attelages de semi-remorques comportant une plaque autolubrifiante qui prend place entre la plaque d'appui de la semi-remorque et la partie frottante de la sellette d'attelage.

Jusqu'alors, sur les tracteurs et les semi-remorques, en particulier, la sellette et la plaque d'attelage étaient graissées à la spatule ou à la truelle avant attelage de la semi-remorque. Lors de l'attelage, la graisse fluait de chaque côté de la sellette et il en résultait une perte de graisse, une mauvaise répartition de la graisse restante et, par conséquent, une lubrification irrégulière et assez éphémère.

Ce défaut de graissage, qui contrariait la libre rotation de la plaque par rapport à la sellette, se traduisait, indirectement, par une usure prématurée des deux pivots de direction, ainsi que des pneus et des bagues des ressorts avant du tracteur. Ce grippage entraînait aussi des difficultés de conduite lors des actions sur le volant de direction (survirage).

Diverses solutions ont été développées pour remédier à cette situation en éliminant le problème de graissage parmi lesquelles on peut citer celles décrites dans les brevets :

EP-A-0058732 ayant pour objet un attelage pour semi-remorques comportant une sellette d'attelage revêtue d'une couche de matière autolubrifiante, une plaque d'attelage dont l'état de la surface est superfinie et une tôle d'acier intermédiaire.

EP-A-0117319 ayant pour objet un attelage pour semi-remorques dont la sellette d'attelage est munie, sur toute sa surface, d'une plaque autolubrifiante fixée par vis dont les bords sont, sur l'arrière, protégés par un renfort métallique rapporté.

Cependant, les dispositifs autolubrifiants ci-dessus évoqués présentent l'inconvénient d'exiger, pour leur réalisation, des travaux assez délicats faisant appel à des outillages et à un savoir faire dont ne dispose pas couramment les entreprises de transport.

La présente invention a pour but de remédier à ces inconvénients. Cette invention, telle qu'elle est caractérisée dans les revendications, résout le problème consistant à créer un dispositif autolubrifiant pour attelage d'engins semi-remorqués, facilement adaptable aux attelages existants.

Cette invention se caractérise principalement en ce que la plaque autolubrifiante est complétée par le dépôt d'une matière plastique autolubrifiante dans le creux de la pièce d'usure en fer à cheval montée dans le fond de l'échancrure de la sellette, en ce que la plaque autolubrifiante est maintenue en place contre la plaque d'appui de la semi-remorque par pincement de la base du pivot sous l'effet de la courbure due à la déformation sous le poids, par l'intermédiaire de pions à tête noyée en matière plastique emmanchés à force dans des orifices percés à la demande dans la plaque d'appui, par des vis situées en dehors de la plaque d'appui, ou par encastrement, en éléments, dans des cavités de forme appropriée, aménagées dans la face d'appui de la sellette.

Les avantages obtenus grâce à cette invention consistent essentiellement en ce que le dispositif se prête notamment à un montage direct sur les attelages, sans transformation préalable de ceux-ci, en éliminant totalement les problèmes de graissage.

L'invention est exposée ci-après en détail à l'aide de dessins représentant différents modes de réalisation de l'invention, donnés à titre d'exemple non limitatifs, sur lesquels :

La figure 1, représente une vue en coupe transversale d'une plaque autolubrifiante montée sur la base du pivot de la plaque d'appui.

La figure 2 représente une vue en coupe transversale d'une plaque autolubrifiante, fixée par l'intermédiaire de pions sous la plaque d'appui.

La figure 3 représente une vue de dessus d'une sellette d'attelage, équipée d'une plaque autolubrifiante fractionnée en éléments, insérés dans la partie flottante de la sellette.

La figure 4 représente une vue en coupe longitudinale partielle d'une sellette montrant le détail du mode d'insertion et de fixation des éléments autolubrifiants représentés à la figure 3.

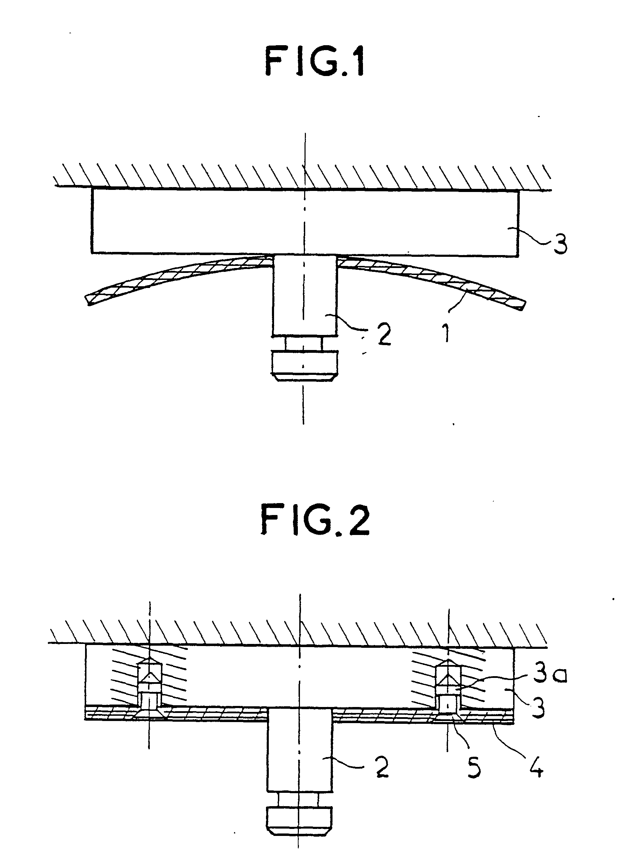

En examinant la figure 1, on remarque que la plaque autolubrifiante 1 prend une forme courbe par déformation due à son propre poids ; ce qui a pour effet de l'immobiliser par pincement sur la base du pivot 2, contre la plaque d'appui 3. Il reste alors à faire pivoter cette plaque dans un sens favorable à son insertion entre la plaque d'appui et la sellette lors de l'attelage de la semi-remorque au tracteur.

En examinant la figure 2 on remarque que, dans ce mode de réalisation, la plaque autolubrifiante 4 est fixée contre la plaque d'appui 3 par l'intermédiaire de pions à tête noyée 5, en matière plastique autolubrifiante, emmanchés à force dans des orifices 3a percés à la demande dans la plaque d'appui 3. Les pions en matière plastique autolubrifiante 5 sont emmanchés dans les orifices percés dans la plaque 3.

Selon un mode de réalisation simplifié du dispositif selon l'invention la plaque autolubrifiante 4 déborde de la plaque d'appui 3 et est fixée par vis ordinaires situées en dehors de la surface travaillante de ladite plaque d'appui.

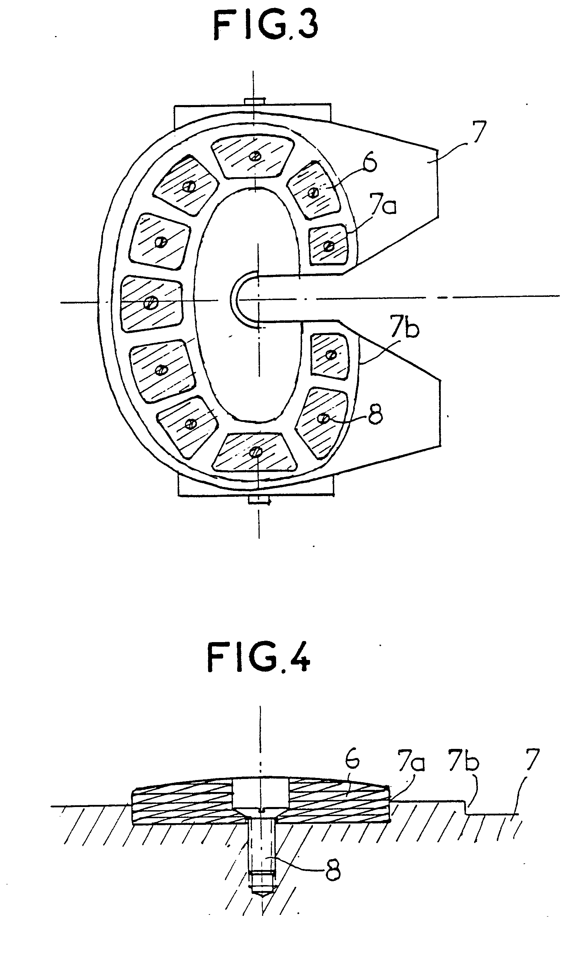

En examinant les figures 3 et 4, on remarque que, lorsque la plaque autolubrifiante est fractionnée en éléments 6, ceux-ci, sont insérés dans les cavités 7a, aménagées dans la face d'appui 7b de la sellette d'attelage 7, puis solidarisés par l'intermédiaire de vis 8 à tête noyée à une profondeur telle que celles-ci n'affleurent pas la surface frottante 7b de la sellette en cas d'extrême usure des éléments 6, qui dépassent le plan de frottement de la partie 7b de la sellette d'environ 5 à 6 mm.

Comme on le constate, il sera aisé de remplacer les éléments autolubrifiants 6, lorqu'ils auront atteint un certain degré d'usure, par action sur les vis à tête noyée 8.

Selon un mode de réalisation simplifié les éléments autolubrifiants 6 sont solidarisés à la sellette 7 par emmanchement à force dans les cavités 7a. Ils doivent être éliminés après usure, à l'aide d'une source de chaleur.

**Revendications**

1. Dispositif autolubrifiant amovible pour attelage de semi-remorque comportant une plaque autolubrifiante, qui prend place entre la plaque d'appui de la semi-remorque et la partie frottante de la sellette d'attelage, caractérisé en ce que la plaque autolubrifiante est complétée par le dépôt d'une matière plastique autolubrifiante dans le creux de la pièce d'usure en fer à cheval montée dans le fond de l'échancrure de la sellette, en ce que la plaque autolubrifiante (1) est maintenue en place contre la plaque d'appui (3) de la semi-remorque par pincement de la base du pivot (2) sous l'effet de la courbure due à la déformation sous le poids, par l'intermédiaire de pions à tête noyée en matière plastique (5) emmanchés à force dans des orifices (3a) percés à la demande dans la plaque d'appui (3) par l'intermédiaire de parties débordantes fixées par vis ordinaires en dehors de la surface travaillante de la plaque d'appui ou par encastrement, en éléments (6), dans des cavités (7a), de forme appropriée, aménagées dans la face d'appui (7b) de la sellette (7).

2. Dispositif autolubrifiant selon la revendication 1, caractérisé en ce que les éléments autolubrifiants (6) sont solidarisés à la sellette (7) par l'intermédiaire d'une ou de plusieurs vis à tête noyée (8) n'affleurant pas la face d'appui (7b) de la sellette (7).

3. Dispositif autolubrifiant selon les revendications 1 et 2, caractérisé en ce que, lorsque la plaque d'appui (3) est fixée par l'intermédiaire de pions (5), ou par encastrement, la face travaillante de cette plaque ou des éléments (6) qui la compose est bombée.

**Claims**

1. Detachable self-lubricating device for the coupling of semitrailers, comprising a self-lubricating plate which is positioned between the bearing plate of the semitrailer and the frictional contact parc of the coupling plate, characterised in that the self-lubricating plate is completed by depositing a self-lubricating plastic material in the hollow of the horseshoe-shaped wearing partfitted in the bottom of the groove in the coupling plate, in that the self-lubricating plate (1) is maintained in position against the bearing plate (3) of the semitrailer by gripping the base of the pivot (2) under the effect of the curvature due to deformation under weight, by way of countersunk head rivets (5) made of plastic material which are force fitted into orifices (3a) produced as required in the bearing plate (3) by way of projecting parts which are secured by standard screws beyond the working surface of the bearing plate or by embedding elements (6) in appropriately shaped cavilies (7a) arranged in the bearing surface (7b) of the plate (7).

2. Self-lubricating device according to Claim 1, characterised in that the self-lubricating elements (6) form one piece with the coupling plate (7) by way of one or a plurality of countersunk head screws (8) which are not flush with the bearing surface (7b) of the coupling plate (7).

3. Self-lubricating device according to Claims 1 and 2, characterised in that, when the bearing plate (3) is secured by way of rivets (5) or by embedding, the working surface of this plate or of its components (6) is curved.

**Patentansprüche**

1. Bewegliche Selbstschmiervorrichtung für die Kupplung von Sattelschleppern mit einer selbstschmierenden Platte zwischen der Stützplatte des Sattelschleppers und dem Gleitabschnitt der Sattelkupplung, dadurch gekennzeichnet, daß die selbstschmierende Platte durch die Einlagerung eines selbstschmierenden Kunststoffmaterials in den Hohlraum des hufeisenförmigen Verschleißkörpers am Boden der Sattelausnehmung vervollständigt ist und daß die selbstschmierende Platte (1) an ihrem Platz an der Stützplatte (3) des Sattelschleppers durch Verklemmen der Basis des Drehzapfens (2) unter der Wirkung der Krümmung aufgrund der Gewichtsdeformation gehalten wird und mittels in Kunststoff versenkten Kopfstiften (5), die in Öffnungen (3a) eingepreßt sind, gehalten ist, die nach Bedarf in der Stützplatte (3) angebracht sind, wobei die Randabschnitte durch normale Schrauben außerhalb der Arbeitsfläche der Stützplatte oder durch Einbettung in Elementen (6) in geeignet geformten Ausnehmungen (7a) befestigt sind, die in die Stützfläche (7b) des Sattels (7) eingebracht sind.

2. Selbstschmiervorrichtung nach Anspruch 1, dadurch gekennzeichnet, daß die selbstschmierenden Elemente (6) mit dem Sattel (7) durch eine oder mehrere versenkte Kopfschrauben (8) vereinigt sind, die mit der Stützfläche (7b) des Sattels (7) nicht in einer Ebene liegen.

3. Selbstschmiervorrichtung nach den Ansprüchen 1 und 2, dadurch gekennzeichnet, daß, wenn die Stützplatte (3) mit Hilfe von Stiften (5) oder durch Einbettung befestigt ist, die Arbeitsfläche dieser Platte oder der Elemente (6), die sie bilden, bombiert ist.

# FIG.1

3

2

1

# FIG.2

3a

3

2

5

4

# FIG.3

# FIG.4